# EUROPEAN PATENT SPECIFICATION

(11) **EP 4 085 298 B1**
(45) Date of publication and mention of the grant of the patent: **25.06.2025**
(21) Application number: 20909714.6
(22) Date of filing: 28.12.2020
(51) Int. Cl.: C09K 11/02, G02F 1/13357, H10H 20/84, H04M 1/02

(54) **A METHOD FOR ENHANCING COLOR RICHNESS OF DISPLAYS**
VERFAHREN ZUM VERBESSERN DES FARBREICHTUMS VON ANZEIGEN
PROCÉDÉ D'AMÉLIORATION DE LA RICHESSE DES COULEURS D'AFFICHAGES

(30) Priority: 31.12.2019 TR 201922816
(43) Date of publication of application: 09.11.2022
(73) Proprietor: Bilkent Universitesi (Unam) Ulusal Nanoteknoloji Arastirma Merkezi, 06800 Ankara (TR)
(72) Inventor: DEMIR, Hilmi Volkan, 06800 Ankara (TR); MUTLUGUN, Evren, 06800 Ankara (TR)
(74) Representative: Vanzini, Christian
(86) International application number: PCT/TR2020/051416
(87) International publication number: WO 2021/137830

(56) References cited:
- EP-A1- 3 017 475
- CN-A- 105 425 463
- CN-A- 105 870 305
- CN-A- 107 688 255
- CN-A- 108 957 847
- CN-A- 109 782 486
- TW-A- 201 810 724
- US-A1- 2008 297 029
- US-A1- 2017 322 436
- US-A1- 2017 322 436
- US-A1- 2019 148 603

## Description

### Technical Field

The present invention relates to a method for widening color space with a much reduced thickness compared to film applications, by coating lower and upper surfaces of a light waveguide -that is used within displays such as tablet and mobile phone- with color enriching materials.

### Background of the Invention

Quantum dot films are used in display technologies in order to increase color richness. Being diffused between a moisture and oxygen barrier film in a polymer matrix; quantum dots enter between optical layers existing in displays, as a new layer. However, particularly in displays wherein physical fineness is important such as tablet and mobile phone, inserting a new physical layer into a display does not meet the thickness requests of such devices. Therefore, there is need for a method which enables to integrate nanostructures such as color-enriching quantum dots into a light waveguide being used within a display, in such a way that they will not increase the display thickness too much; and ensures new nanostructures to be integrated.

The Chinese patent document no. CN104536078**,** an application in the state of the art, discloses a quantum dot display device which achieves a wide color gamut at a low color. A dichroic filter-enhanced fluorescent light guide plate is located on the quantum dot display device. The light guide plate is coated with an optical coating composition. The optical coating composition containing the quantum dots is applied on the surface of the light guide plate by a spraying coating method and it has a thickness of 40 um. After coating, the light guide plate is cured upon being heated at 80 °C for 20 minutes. However, coating of structures such as nanoplate is not disclosed in the said patent except quantum dots.

The Chinese patent document no. CN103955093**,** an application in the state of the art, discloses an optical plate based on quantum dots. The optical plate is coated with quantum dots capable of converting blue light into red and green light. The coating process is carried out by fixing the quantum dots on the optical plate by spraying. The optical plate based on quantum dots can be used as a light guide plate. However, coating of structures such as nanoplate is not disclosed in the said patent except quantum dots.

The Chinese patent document no. CN108957847**,** an application in the state of the art, discloses a liquid crystal display whereon a quantum dot film with a high water-oxygen barrier is mounted. The quantum dot film with the high water-oxygen barrier comprises a quantum dot layer, a first substrate and a second substrate. The quantum dot layer is arranged between the first substrate and the second substrate. The liquid crystal display comprises a light guide plate and a quantum dot film with a high water-oxygen barrier. The quantum dot film with the high water-oxygen barrier is arranged on the light guide plate and the light guide plate is enabled to have a strong water and oxidation resistance. However, the said patent does not disclose how the barrier layer is placed on the surface.

The European Patent Application EP 3 017 475 A1 discloses photoluminescent nanoparticles which are processable in a number of solvents and by a number of methods, allowing facile integration into plastic or glass waveguide matrices at high photoluminescent nanoparticle concentration, and allowing co-deposition with the matrix material by scalable solution-based methods including spray coating, ultrasonic spray coating.

### Summary of the Invention

An objective of the present invention is to realize a method for widening color space with a much reduced thickness compared to film applications, by coating upper and lower surfaces of a light waveguide -that is used within displays such as tablet and mobile phone- with color enriching materials.

Another objective of the present invention is to realize a method for coating a light waveguide in displays with quantum dots and nanoplates in order to provide color enrichment.

### Detailed Description of the Invention

"A Method for Enhancing Color Richness of Displays" realized to fulfil the objectives of the present invention is shown in the figure attached, in which:

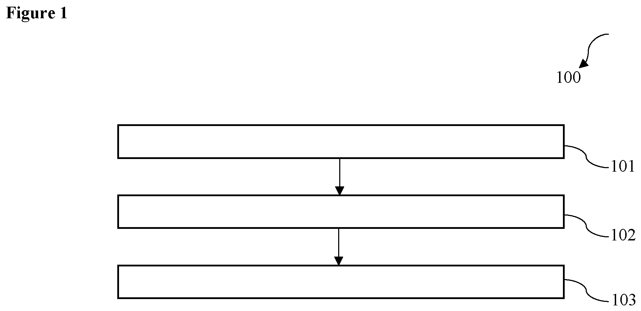

**Figure 1** is a view of a flowchart of the inventive method.

### 100. Method

The inventive method (100) for widening color space with a much reduced thickness compared to film applications in displays such as tablet and mobile phone comprises steps of:
- coating materials, which form an oxygen and moisture barrier, on lower and upper surface of a light waveguide being used in displays by spray coating (101);
- coating color enriching materials on the light waveguide, which is coated with an oxygen and moisture barrier on the upper and lower surface thereof, by spray coating (102); and
- re-coating the light waveguide, which is coated with a color enriching material, with a material forming an oxygen and moisture barrier (103).

In the inventive method (100); before a light waveguide being used in edge-lit displays is integrated into the related display, its upper and lower surfaces are coated with spraying transparent metal oxide nanoparticle solutions, i.e. preferably Al₂O₃ nanoparticles which enable to form an oxygen and moisture barrier (101). Surfaces of a light waveguide -upper and lower surfaces of which are coated with transparent metal oxide nanoparticle solutions- are coated with quantum dot and nanoplate solutions having color enriching characteristic by means of spraying method (102). The quantum dots used enable to increase color richness in display technologies; whereas nanoplates provide sharp (pure) colors and have a high absorption coefficient. Lastly, upper and lower surfaces of the light waveguide coated with color enriching materials are coated by spraying transparent metal oxide nanoparticle solutions -preferably Al₂O₃ nanoparticle- in order to protect them against oxygen and moisture (103).

With the inventive method (100), a sandwich-like structure is created by coating upper and lower surfaces of a light waveguide with a material forming an oxygen and moisture barrier, a color enriching material and again a material forming an oxygen and moisture barrier, respectively. A structure obtained in this way enables to form a physically fine structure without requiring an extra film thickness particularly on small-area displays.

The inventive method (100) enables to obtain fine surfaces which avoid unwanted display thickness that may occur by inserting a new physical layer into the display, in displays wherein physical fineness is important.

In an embodiment of the invention, the said method (100) can be applied by using materials that will meet the color requests required for monochrome color converter application on light-diffusing layers as well.

## Claims

1. A method (100) for widening color space with a much reduced thickness compared to film applications in displays such as tablet and mobile phone, **characterized by** steps of:
- coating materials, which form an oxygen and moisture barrier, on lower and upper surface of a light waveguide being used in displays by spray coating (101);
- coating color enriching materials on the light waveguide, which is coated with an oxygen and moisture barrier on the upper and lower surface thereof, by spray coating (102); and
- re-coating the light waveguide, which is coated with a color enriching material, with a material forming an oxygen and moisture barrier (103).

2. A method (100) according to Claim 1; **characterized in that** before a light waveguide being used in edge-lit displays is integrated into the related display, its upper and lower surfaces are coated by spraying transparent metal oxide nanoparticle solutions, i.e. preferably Al₂O₃ nanoparticles which enable to form an oxygen and moisture barrier (101).

3. A method (100) according to Claim 2; **characterized in that** surfaces of a light waveguide -upper and lower surfaces of which are coated with transparent metal oxide nanoparticle solutions- are coated with quantum dot and nanoplate solutions having color enriching characteristic by means of spraying method (102).

4. A method (100) according to Claim 3; **characterized in that** the quantum dots used increase color richness in display technologies; whereas nanoplates provide sharp (pure) colors and have a high absorption coefficient.

5. A method (100) according to Claim 4; **characterized in that** upper and lower surfaces of the light waveguide coated with color enriching materials are coated by spraying transparent metal oxide nanoparticle solutions - preferably Al₂O₃ nanoparticle- in order to protect them against oxygen and moisture (103).

## Patentansprüche

1. Verfahren (100) zum Erweitern des Farbraums mit einer erheblich reduzierten Dicke im Vergleich zu Folienanwendungen in Anzeigen wie Tablets und Mobiltelefonen, **gekennzeichnet durch** die folgenden Schritte:
- Beschichten mit Materialien, die eine Barriere gegen Sauerstoff und Feuchtigkeit bilden, die untere und die obere Oberfläche eines Lichtwellenleiters, der in Anzeigen verwendet wird, mittels Sprühbeschichtung (101);
- Beschichten des Lichtwellenleiters, der mit einer Sauerstoff- und Feuchtigkeitsbarriere auf seine obere und untere Oberfläche beschichtet wird, mit farbanreichernden Materialien mittels Sprühbeschichtung (102); und
- Beschichten wieder des Lichtwellenleiters, der mit einem farbanreichernden Material beschichtet wird, mit einem Material, das eine Barriere gegen Sauerstoff und Feuchtigkeit bildet (103).

2. Verfahren (100) nach Anspruch 1, **dadurch gekennzeichnet, dass** bevor ein Lichtwellenleiter, der in kantenbeleuchteten Anzeigen verwendet wird, in die betreffende Anzeige integriert wird, werden seine obere und untere Oberflächen mittels Sprühen von Lösungen bestehend aus transparenten Metalloxidnanopartikeln, vorzugsweise Al₂O₃-Nanopartikeln beschichtet (101), die eine Barriere gegen Sauerstoff und Feuchtigkeit bilden.

3. Verfahren (100) nach Anspruch 2, **dadurch gekennzeichnet, dass** die Oberflächen eines Lichtwellenleiters - dessen obere und untere Oberflächen mit Lösungen bestehend aus transparenten Metalloxidnanopartikeln beschichtet sind - mit Quantenpunkt-und Nanoplatelösungen mit farbanreichernder Eigenschaft mittels eines Sprühverfahrens beschichtet werden (102).

4. Verfahren (100) nach Anspruch 3, **dadurch gekennzeichnet, dass** die verwendeten Quantenpunkte die Farbreichtum in Anzeigetechnologien erhöhen, während Nanoplates klare (reine) Farben anbieten und einen hohen Absorptionskoeffizienten aufweisen.

5. Verfahren (100) nach Anspruch 4, **dadurch gekennzeichnet, dass** die obere und untere Oberfläche des Lichtwellenleiters, die mit farbanreichernden Materialien beschichtet werden, mittels Sprühen von Lösungen bestehend aus transparenten Metalloxidnanopartikeln - vorzugsweise Al₂O₃-Nanopartikeln - beschichtet werden, um sie gegen Sauerstoff und Feuchtigkeit zu schützen (103).

## Revendications

1. Procédé (100) d'élargissement de l'espace colorimétrique avec une épaisseur considérablement réduite par rapport aux applications à base de film dans des affichages tels que les tablettes et les téléphones mobiles, **caractérisé par** les étapes consistant à:
- revêtir des matériaux formant une barrière contre l'oxygène et l'humidité sur les surfaces inférieure et supérieure d'un guide d'ondes lumineux utilisé dans les affichages par revêtement par pulvérisation (101);
- revêtir des matériaux d'enrichissement des couleurs sur le guide d'ondes lumineux, lequel est revêtu d'une barrière contre l'oxygène et l'humidité sur ses surfaces supérieure et inférieure, par revêtement par pulvérisation (102); et
- re-revêtir le guide d'ondes lumineux, lequel est revêtu d'un matériau d'enrichissement des couleurs, avec un matériau formant une barrière contre l'oxygène et l'humidité (103).

2. Procédé (100) selon la revendication 1, **caractérisé en ce qu'**avant qu'un guide d'ondes lumineux utilisé dans des affichages à rétroéclairage latéral ne soit intégré à l'affichage concerné, ses surfaces supérieure et inférieure sont revêtues par pulvérisation de solutions de nanoparticules d'oxyde métallique transparent, de préférence des nanoparticules d'Al₂O₃, permettant de former une barrière contre l'oxygène et l'humidité (101).

3. Procédé (100) selon la revendication 2, **caractérisé en ce que** les surfaces d'un guide d'ondes lumineux - dont les surfaces supérieure et inférieure sont revêtues de solutions de nanoparticules d'oxyde métallique transparent - sont revêtues de solutions de boîtes quantiques et de nanoplaquettes ayant une caractéristique d'enrichissement des couleurs, au moyen d'une méthode de pulvérisation (102).

4. Procédé (100) selon la revendication 3, **caractérisé en ce que** les boîtes quantiques utilisées augmentent la richesse des couleurs dans les technologies d'affichage, tandis que les nanoplaquettes fournissent des couleurs pures et nettes et possèdent un coefficient d'absorption élevé.

5. Procédé (100) selon la revendication 4, **caractérisé en ce que** les surfaces supérieure et inférieure du guide d'ondes lumineux revêtu de matériaux d'enrichissement des couleurs sont revêtues par pulvérisation de solutions de nanoparticules d'oxyde métallique transparent - de préférence des nanoparticules d'Al₂O₃ - afin de les protéger contre l'oxygène et l'humidité (103).
